Europäisches Patentamt

European Patent Office

Office européen des brevets

(19)

(11) **EP 0 902 202 B1**

(12) **EUROPÄISCHE PATENTSCHRIFT**

(45) Veröffentlichungstag und Bekanntmachung des Hinweises auf die Patenterteilung:
**29.12.2004   Patentblatt 2004/53**

(51) Int Cl.[7]: **F16C 33/08**

(21) Anmeldenummer: **98116917.0**

(22) Anmeldetag: **10.09.1998**

(54) **Extrem dünnwandiges Gleitlager**

Extremely thin-walled sliding bearing

Palier lisse à parois ultra-minces

(84) Benannte Vertragsstaaten:
**DE ES FR GB IT**

(30) Priorität: **11.09.1997   DE 19739929**

(43) Veröffentlichungstag der Anmeldung:
**17.03.1999   Patentblatt 1999/11**

(73) Patentinhaber: **Federal-Mogul Wiesbaden GmbH & Co.KG**
**65201 Wiesbaden (DE)**

(72) Erfinder:
• **Niegel, Fritz**
**65375 Oestrich-Winkel (DE)**
• **Arnold, Gerhard**
**65321 Heidenrod (DE)**
• **Schöneich, Guido**
**65375 Oestrich-Winkel (DE)**

• **Lucchetti, Werner**
**65396 Walluf (DE)**

(74) Vertreter: **Mehler, Klaus, Dr. rer.nat. et al**
**Fuchs Mehler Weiss Fritzsche**
**Postfach 46 60**
**65036 Wiesbaden (DE)**

(56) Entgegenhaltungen:
**EP-A- 0 304 109          EP-A- 0 668 447**
**DE-C- 3 328 509          DE-C- 19 606 992**
**GB-A- 256 200            US-A- 2 905 511**

• **DR. E. RÖMER: "Die Berechnung des Presssitzes von Gleitlagern" MTZ, Bd. 2/4, Nr. 22, 2. Februar 1961, Seiten 51-56, XP002089322 WIESBADEN**
• **DR. E. RÖMER: "Aspekte zur Gleitlagerung von Nutzfahrzeug-Dieselmotoren" MTZ, Bd. 38, Nr. 9, 1977, Seiten 389-396, XP002089323 wiesbaden**

**Beschreibung**

Die Erfindung betrifft eine Gleitlagerschale mit Lagerrücken und darauf aufgebrachtem ein-oder mehrschichtigem Lagerwerkstoff, wobei für das Verhältnis der Einbauspreizung S zum Lagerdurchmesser D gilt:

$$0{,}025 \leq S/D \leq 0{,}05.$$

Lagerschalen mit einem S/D-Wert von 0,035 sind beispielsweise aus der DE 196 06 992 C1 bekannt.

In Verbrennungsmotoren wird zur Energieeinsparung die Leichtbauweise, d.h. der Einsatz leichter Pleuelstangen und Lagerdeckel sowie der Einsatz von Leichtmetallen bevorzugt. Dies führt dazu, daß sich die Bohrung für die Aufnahme des Gleitlagers unter Belastung verformt und aufweitet, wodurch zwischen dem Lagerrücken und der Aufnahmebohrung Relativbewegungen entstehen. Um die Lagerschale in der Aufnahmebohrung gegen Verdrehen zu sichern, wird der Außendurchmesser der Lagerschale größer als der Innendurchmesser der Aufnahmebohrung ausgelegt. Beim Einbau des Lagers in das Gehäuse entsteht infolge des Übermaßes der Lagerschale eine Spannung, und zwar in tangentialer Richtung eine Druckspannung $\sigma_L$ sowie zwischen dem Lager und dem Gehäuse ein Radialdruck $\rho_r$, der den Festsitz bestimmt.

Bei laufendem Motor verschlechtert sich aber der Festsitz infolge von Gehäuseverformungen und Kriechen vom Stahl bei der Lagerschale infolge der hohen Temperatur, wodurch sich der Radialdruck vermindert. Nach "Die Berechnung des Preßsitzes von Gleitlagerschalen". Dr. E. Römer, Sonderdruck aus MTZ, Jahrgang 22, Heft 2 sollte der Radialdruck bei Pleuellagern deshalb im Mittel mindestens ca. 10 N/mm$^2$ betragen, um einen sicheren Festsitz des Lagers im Betrieb zu gewährleisten.

Bei der Auslegung der Lagerschale muß aber auch die Druckspannung $\sigma_L$ berücksichtigt werden, die ca. um den Faktor 20 größer als der Radialdruck $\rho_r$ und somit für die tatsächliche Beanspruchung des Lagers verantwortlich ist.

Da die Belastung von der Querschnittsfläche des Lagers abhängt, folgt daraus, daß bei konstantem Übermaß und abnehmbarer Wandstärke die Beanspruchung zunimmt.

Aus diesem Grund wurden bisher nur Lagerschalen mit einer Gesamtwandstärke $\geq 1{,}4$ mm (Gehäusebohrungsdurchmesser von 50 mm, d.h. das Verhältnis der effektiven Wandstärke zum Lageraußendurchmesser $W_{eff}/D$ ist größer als 0,02) eingesetzt. Unter der effektiven Wandstärke $W_{eff}$ versteht man die Summe der Einzelschichtstärken, die unter Berücksichtigung des maximalen E-Moduls des Schichtsystems normiert sind.

Aus "Die Berechnung des Preßsitzes von Gleitlagerschalen", Dr. Erich Römer, Sonderdruck aus MTZ, Jahrgang 22, Heft 2 und 4/1961 sowie "Aspekte zur Gleitlagerung von Nutzfahrzeug-Dieselmotoren", Dr. Erich Römer, Sonderdruck aus MTZ, 79. Jahrgang, Nr. 9/77 ist es bekannt, daß das Verhältnis $W_{eff}/D$ bei 0,03 bis 0,05 bzw. bei Pleuellagern das Verhältnis der Wanddicke W zu D bei 0,02 bis 0,03 liegt.

Besonders wichtig ist der verbleibende Radialdruck bei Pleuellagern, da in diesem Anwendungsfall die Verformung der Aufnahmebohrung infolge von wechselnder Zug- und Druckbelastung sehr groß ist.

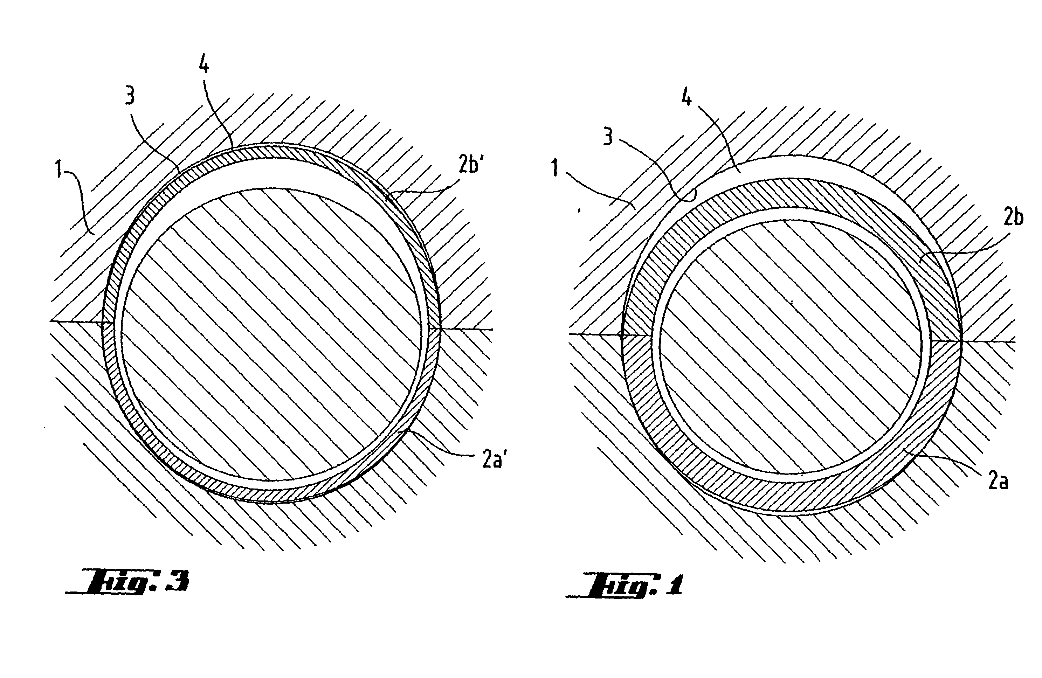

Bei einem laufenden Motor findet ein extrem schneller Lastwechsel durch den sich in axialer Richtung bewegenden Kolben statt. Dies führt, wie in Fig. 1 dargestellt ist, dazu, daß eine herkömmliche Lagerschale 2a, 2b der Verformungsbewegung der Bohrung 3 nicht mehr ausreichend folgen kann und der Lagerrücken kurzzeitig vom Gehäuse 1 abhebt.

Hieraus ergeben sich zwei Probleme:

1. Durch den kurzzeitig entstehenden Spalt 4 dringt Öl zwischen Lagerrücken und Aufnahmebohrung 3. Schließt sich der Spalt wieder, so wird eine Restmenge des Öles eingeschlossen, wodurch sich dann mit der Zeit Ölkohle auf dem Lagerrücken aufbaut.

2. Durch die Verformung liegt die Lagerschale 2a, 2b nicht mehr in vollem Umfang am Gehäuse 1 an, wodurch auch der Radialdruck nicht mehr in voller Höhe wirken kann. Um das Lager nun gegen ein Verdrehen im Gehäuse 1 zu sichern, muß der Radialdruck den beschriebenen Mindestwert aufweisen.

Aus diesem Grund behielt man beim bisherigen Stand der Technik zur Verminderung des Ölkohleaufbaues auf dem Lagerrücken die Wanddicke bei, um einen Mindestradialdruck zu gewährleisten. Andererseits wurde der Lagerrücken auf vielfältige Weise bearbeitet, um das zwischen Lagerrücken und Aufnahmebohrung eindringende Öl abzuleiten und dadurch den Ölkohleaufbau zu vermindern.

Allerdings waren diese Lager äußerst aufwendig bei der Herstellung und darüber hinaus nicht besonders effektiv.

Aus der DE 33 28 509 C1 ist eine solche Gleitlageranordnung mit einem dünnwandigen Gleitlagerelement bekannt. Zur Verhinderung des Ölkohleaufbaus zwischen der Rückenfläche und der Aufnahmebohrung werden auf dem Lagerrücken feine Kanäle als Drainagekanäle für flüssiges Schmiermittel eingebracht. Durch die Drainagekanäle soll dem Schmiermittel die Gelegenheit gegeben werden. im Verlauf der Relativbewegung nach den freien Enden der Sitzfläche hin auszuweichen. Die Voraussetzungen für die Ölkohleentstehung hinsichtlich Druck und Temperatur werden dadurch vermieden.

In der US 2,905,511 A werden Lagerschalen beschrieben, die zum Teil eine Gesamtwanddicke von nur 1,07 mm aufweisen und zusätzlich ebenfalls Nuten oder Vertiefungen aufweisen, wobei aber keine Angaben zum Außendurchmesser gemacht werden.

Das Vorsehen von Drainagenuten oder Vertiefungen bedingt jedoch einen erheblichen Herstellungsaufwand.

Ein ähnlicher Lösungsansatz findet sich in der GB 256 200 A, wonach der Lagerrücken Vorsprünge aufweist, die an der Lagerbohrung anliegen. Die Lagerschale wird aufgrund der Wanddickenreduzierungen zwischen den Vorsprüngen insgesamt flexibler.

Eine andere Lösung wird in der EP 0 304 109 A beschrieben. Um den Festsitz im Lagergehäuse unter allen Betriebsbedingungen der Brennkraftmaschine zu gewährleisten, ist auf der Rückseite der Stahlstützschicht eine 0,5 bis 5 μm dicke metallische Schutzschicht vorgesehen.

Aufgabe der Erfindung ist es, eine Gleitlagerschale zu schaffen, die eine Reduzierung der Ölkohlebildung auf dem Gleitlagerrücken aufweist und die eine Verbesserung des Gleitlagerfestsitzes im Betrieb durch Verminderung der Relativbewegung zwischen Lagerrücken und Aufnahmebohrung zeigt.

Diese Aufgabe wird mit einer gattungsgemäßen Gleitlagerschale gelöst, bei der für das Verhältnis der effektiven Wanddicke $W_{eff}$ zum Lageraußendurchmesser D gilt: $0,012 \le W_{eff}/D \le 0,02$.

Bei dickwandigen Lagerschalen war ein Radialdruck von mindestens ca. 10 N/mm² für erforderlich gehalten, damit aufgrund der Verformung der Aufnahmebohrung die Lagerschale noch mindestens im Bereich der Teilflächen anliegt und somit einerseits die Ölkohlebildung in diesem Bereich und die Verdrehung der gesamten Lagerschale verhindert wird. Da ein Radialdruck von mehr als 10 N/mm² bei den erfindungsgemäßen extrem dünnwandigen Lagerschalen nicht realisierbar ist, bestand das Vorurteil. daß diese Lagerschalen insgesamt nicht brauchbar sind.

Es hat sich jedoch überraschend herausgestellt, daß die extrem dünnwandigen Lagerschalen aufgrund ihrer größeren Elastizität der Verformung der Aufnahmebohrung folgen und somit vollständig in der Aufnahmebohrung anliegen, so daß aufgrund der größeren Auflagefläche ein insgesamt geringerer Radialdruck als Verdrehsicherung ausreicht. Es konnte gezeigt werden, daß Radialdrücke von beispielsweise 8 N/mm² ausreichen, um ein Verdrehen der Lagerschale im Betrieb zu verhindern. Die Lagerschale hebt von der Lagerbohrung nicht ab, so daß auf der Rückseite kein oder nur ein geringfügiger Spalt entsteht, durch den Öl hindurchfließen kann. Die Ölkohlebildung wird dadurch auf dem Lagerrücken verhindert oder mindestens erheblich reduziert.

Die extrem dünnwandige Gleitlagerschale ist sehr elastisch und kann der Verformung der Aufnahmebohrung infolge hoher Zug- und Druckbelastung durch Zünd- und Fliehkräfte bei Verbrennungsmotoren gut folgen. Die Lagerschalen zeigen einen sehr guten Festsitz und auch nach langer Laufzeit bei hohen Drehzahlen und Temperaturen ist kein nennenswerter Aufbau von Ölkohle auf dem Lagerrücken sowie in der Pleuelstangenbohrung feststellbar.

Weitere Vorteile der dünnwandigen Gleitlagerschale sind:

- gute Wärmeabfuhr von der Gleitlagerfläche

- geringes Gewicht von Pleuellagern führt zur Reduzierung der Fliehkräfte bei Motoren mit hohen Drehzahlen

- sehr gute Umformbarkeit bei der Herstellung (insbesondere bei der Großserienfertigung)

- die Gleitlagerschale verursacht nur eine geringe Verformung der Aufnahmebohrung durch das Lagerübermaß.

Im Gegensatz zum Stand der Technik, wie er beispielsweise aus der DE 33 28 509 C, US 2,905,511 A und der GB 256200 A bekannt ist, entfällt eine aufwendige Bearbeitung des Lagerrückens, um die Wanddicke zu reduzieren.

Diese positiven Effekte stellen sich erst ein, wenn $W_{eff}/D \le 0,02$ beträgt. Allerdings kann die Wandstärke der Lagerschale nicht beliebig dünn gemacht werden, weil es sich herausgestellt hat, daß auch die Spreizung der Lagerschale berücksichtigt werden muß, was unter fertigungstechnischen Gesichtspunkten zum unteren Grenzwert von $W_{eff}/D = 0,012$ geführt hat.

Bei der Lagerschalenauslegung ist der Spreizungsverlust durch Abbau von Eigenspannungen bei hohen Temperaturen während des Betriebes zu berücksichtigen.

Es hat sich gezeigt, daß der Spreizungsverlust auch vom Lageraußendurchmesser abhängig ist, wobei mit abnehmendem Durchmesser auch der Spreizungsverlust abnimmt. Deshalb sagt die Wanddicke der Lagerschale für sich allein über den Spreizungsverlust nichts aus. Aus diesem Grund ist die effektive Wanddicke $W_{eff}$ sowie das Verhältnis $W_{eff}/D$ zu berücksichtigen.

Es hat sich herausgestellt, daß bei Temperaturen > 150°C noch eine positive Spreizung (Restspreizung) vorhanden sein muß, die bei einem beispielhaften Lager mit dem Außendurchmesser von D = 50,6 mm bei mindestens ca. 0,5 mm liegen muß. Diese Mindestrestspreizung ist notwendig, um das Einfedern von Pleuellagern zum Zapfen hin während des Betriebes zu verhindern, weil sonst im Bereich der Teilfläche Mischreibung durch einen momentanen kurzzeitigen Ölmangel auftritt. Die Folge hiervon wären Ermüdung sowie örtlicher Verschleiß und letztendlich Lagerschäden.

Die Festlegung der Spreizung wird durch simulierende Versuche im Wärmeofen ermittelt.

Ein Spreizungsverlust bei der Lagerschale tritt außerdem bereits durch die nach dem Pressen erfolgenden Bearbeitungsschritte (Räumen, Bohren etc.) ein. Dabei nimmt der Spreizungsverlust durch spanende Bearbeitung mit abnehmender Wanddicke zu. Die durch das Pressen erreichbare Ausgangsspreizung läßt sich jedoch nicht beliebig erhöhen, da die Lagerschale bei zu großer Spreizung keine runde Form mehr annimmt. Um eine Mindestrestspreizung sicherzustellen, wurde herausgefunden, daß das Verhältnis Einbauspreizung S zum Lageraußendurchmesser D im Bereich von 0,025 bis 0,05 liegen muß. Diese Verhältnisse sind aber nur erreichbar, wenn $W_{eff}$/D den unteren Wert von 0.012 nicht unterschreitet.

Es zeigen:

Fig. 1     Lagerschalen nach dem Stand der Technik im eingebauten Zustand unter Belastung,

Fig. 2     ein Diagramm, in dem die Radialspannung in Abhängigkeit von der Temperatur aufgetragen ist und

Fig. 3     erfindungsgemäße Lagerschalen im eingebauten Zustand unter Belastung.

## 1. Versuch

Gleitlagerabmessungen:
Stahldicke 0,76 mm
Wandstärke 1,025 mm
effektive Wandstärke $W_{eff}$ = 0,87 mm
Durchmesser D = 50,6 mm
Verhältnis $W_{eff}$/D = 0,017
Einbauspreizung S = 1,47 mm
S/D = 0,029
Radialspannung: 10,2 N/mm$^2$
Versuchsbedingungen:
Serienpleuel
Drehzahl 6700 min$^{-1}$
Öleintrittstemperatur: 100°C
Laufzeit: 350 h
Versuchsergebnis:
verbleibende Spreizung: 0,79 mm
verbleibende Radialspannung: 8,5 N/mm$^2$
Spreizungsverlust: 0.68 mm

## 2. Versuch

Gleitlagerabmessungen:
Stahldicke 0,76 mm
Wandstärke 1,025 mm
effektive Wandstärke $W_{eff}$ = 0,87 mm
Durchmesser D = 50,6 mm
Verhältnis $W_{eff}$/D = 0,017
Einbauspreizung S = 1,6 mm
S/D = 0,031
Radialspannung: 9,8 N/mm$^2$
Versuchsbedingungen:

Serienpleuel
Drehzahl 6700 min$^{-1}$
Öleintrittstemperatur: 140°C
Laufzeit 70 h
Versuchsergebnis:
verbleibende Spreizung: 0,5 mm
verbleibende Radialspannung: 7,9 N/mm$^2$
Spreizungsverlust: 1,10 mm

## 3. Versuch

Gleitlagerabmessungen:
Stahldicke 0.50 mm
Wandstärke 0.765 mm
effektive Wandstärke $W_{eff}$ = 0.625 mm
Durchmesser D = 50.6 mm
Verhältnis $W_{eff}$/D = 0,012
Einbauspreizung S = 0,95 mm
S/D = 0,018
Radialspannung: 5,8 N/mm$^2$
Versuchsbedingungen:
Serienpleuel
Drehzahl 6700 min$^{-1}$
Öleintrittstemperatur: 100°C
Laufzeit 250 h
Versuchsergebnis:

verbleibende Spreizung: 0,10 mm
verbleibende Radialspannung: 4,7 N/mm$^2$
Spreizungsverlust: 0,85 mm
Auftreten von örtlicher Kavitation; im Bereich der Freiräumung ist die Bleibronze freigelegt (vermutlich infolge zu geringer verbleibender Restspreizung)

Die Preßrohlinge für die Lagerschalen, die im 3. Versuch eingesetzt wurden, hatten bei einer Gesamtwanddicke von 0,765 mm im Ausgangszustand eine Spreizung von ca. 2.4 mm. Nach dem Fertigungsdurchlauf reduziert sich die Spreizung um 1,4 mm auf 0,95 mm.

Nach dem Laufversuch betrug die Restspreizung infolge Eigenspannungsabbau nur noch 0.1 mm. Um eine ausreichende Restspreizung von 0,5 mm bei der Lagerschale mit D = 50.6 mm zu erhalten, hätte der Preßrohling eine Ausgangsspreizung von ca. 3 mm haben müssen, was fertigungstechnisch aber nicht möglich ist.

Dieser 3. Versuch zeigt, daß die Lagerschalen dann nicht die vorteilhaften Eigenschaften zeigen, wenn nicht beide Parameter $W_{eff}$/D und S/D eingehalten werden.

Parallel zu den Versuchdurchläufen auf dem Prüfstand wurden Einspannversuche mit dem dünnwandigen Lagern zur Untersuchung des Verlustes der Lagervorspannung (Änderung des Radialdrucks) und des Verlustes der Spreizung unternommen, da sich diese Werte direkt mit den Untersuchungsergebnissen herkömmlicher Lagerschalen (Wanddicken 1,4 und 1,8 mm gleicher Lagergeometrie) vergleichen lassen.

Für die Einspannversuche wurden die Lagerschalen in eine Pleuelstange eingebaut und anschließend bei konstanten Temperaturen im Bereich zwischen 20°C und 250°C über eine Zeit von jeweils 20 Stunden im Ofen wärmebehandelt.

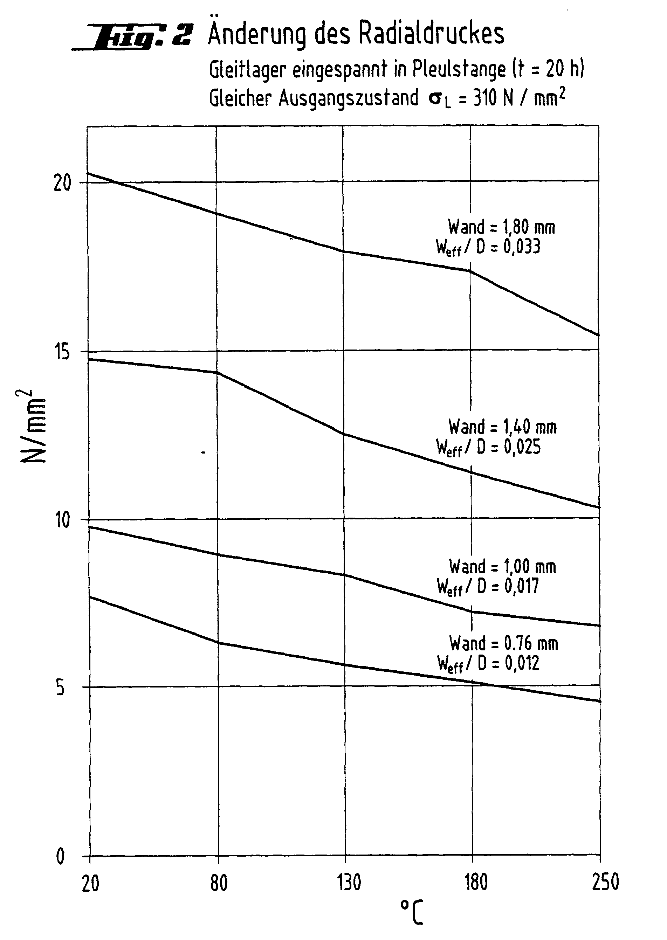

In der Fig. 2 ist die Änderung des Radialdrucks in Abhängigkeit von der Temperatur dargestellt. Es hat sich gezeigt, daß die Lagervorspannung (Radialdruck) mit steigender Temperatur linear abnimmt, wobei die Steigung der Geraden nicht sehr steil ist und für alle Lagerabmessungen gleich ist. Dies bedeutet, daß der relative Vorspannungsverlust nicht von der Wanddicke abhängig ist.

Die Vorspannkraft der dünnwandigen Lagerschalen ist erwartungsgemäß etwas niedriger als bei herkömmlicher Wanddicke. Bei einem Verhältnis für $W_{eff}/D > 0,02$ ist ein Radialdruck von 10 N/mm$^2$ durchaus erforderlich. Bei einem Verhältnis für $W_{eff}/D < 0,02$ ist dagegen ein Radialdruck von 10 N/mm$^2$ nicht unbedingt notwendig, so daß man davon ausgehen kann. daß der Preßsitz bei extrem dünnwandigen Lagerschalen in der Praxis völlig ausreichend ist.

Da die Belastung von der Querschnittsfläche des Lagers abhängt, folgt daraus, daß bei konstantem Übermaß und abnehmender Wandstärke die Beanspruchung zunimmt. Der minimale erreichbare Radialdruck ist somit durch die Materialfestigkeit der Lagerschale begrenzt und liegt bei einer Wandstärke von einem Millimeter unter 10 N/mm$^2$.

Wie in der Fig. 3 dargestellt ist, kann die extrem dünnwandige Lagerschale 2a, 2b durch eine verbesserte Anpassung an die Aufnahmebohrung den Gehäuseverformungen besser folgen. Der Spalt 4 zwischen Lagerrücken und Bohrung 3 ist wesentlich kleiner, wodurch der Aufbau von Ölkohle deutlich verringert wird. Eine aufwendige Bearbeitung des Lagerrückens ist somit nicht mehr erforderlich. Gleichzeitig ist durch die bessere Anlage an die Gehäusebohrung ein geringerer Radialdruck als Verdrehsicherung ausreichend als bei den herkömmlichen Lagern gemäß Fig. 1.

## Patentansprüche

1. Pleuellagerschale mit Lagerrücken und darauf aufgebrachtem ein- oder mehrschichtigem Lagerwerkstoff, wobei für das Verhältnis der Einbauspreizung S zum Lageraußendurchmesser D gilt: $0,025 \leq S/D \leq 0,05$. **dadurch gekennzeichnet,**
   **daß** für das Verhältnis der effektiven Wanddicke $W_{eff}$ zum Lageraußendurchmesser D gilt: $0,012 \leq W_{eff}/D \leq 0,02$.

## Claims

1. A big end bearing shell with a bearing back having one or multiple layers of bearing material applied thereon, the ratio mounting spacing S to outer diameter of the bearing D being $0.025 \leq S/D \leq 0.05$, **characterized in**
   **that** for the ratio effective wall thickness $W_{eff}$ to outer diameter of the bearing D the following applies: $0.012 \leq W_{eff}/D \leq 0.02$.

## Revendications

1. Coquille de coussinet de bielle avec une face arrière de coussinet sur laquelle est appliquée, en une ou plusieurs couches, une matière de coussinet, le rapport écart de montage S / diamètre extérieur du coussinet D s'exprimant de la manière suivante: $0,025 \leq S/D \leq 0,05$, **caractérisé en ce**
   **que**, pour le rapport épaisseur effective de paroi $W_{eff}$ / diamètre extérieur du coussinet D, on peut écrire: $0,012 \leq W_{eff}/D \leq 0,02$.

Fig. 3

Fig. 1

EP 0 902 202 B1

**Fig. 2** Änderung des Radialdruckes

Gleitlager eingespannt in Pleulstange (t = 20 h)

Gleicher Ausgangszustand $\sigma_L$ = 310 N / mm$^2$